# EUROPEAN PATENT SPECIFICATION

(11) **EP 3 176 299 B1**
(45) Date of publication and mention of the grant of the patent: **03.10.2018**
(21) Application number: 15845288.8
(22) Date of filing: 18.09.2015
(51) Int. Cl.: D06F 33/02, D06F 39/00

(54) **CLEAN-WATER-WASHING FUNCTION CONTROL METHOD OF A WASHING MACHINE**
VERFAHREN ZUR STEUERUNG DER WASCHFUNKTION MIT SAUBEREM WASSER EINER WASCHMASCHINE
PROCÉDÉ DE COMMANDE DE FONCTION DE LAVAGE À L'EAU PROPRE D'UNE MACHINE À LAVER

(30) Priority: 22.09.2014 CN 201410488183
(43) Date of publication of application: 07.06.2017
(73) Proprietor: Qingdao Haier Smart Technology R&D Co., Ltd., Shandong 266101 (CN)
(72) Inventor: ZHANG, Jingjing, Qingdao Shandong 266101 (CN); WANG, Chunxu, Qingdao Shandong 266101 (CN); HAO, Shilong, Qingdao Shandong 266101 (CN); LI, Yimin, Qingdao Shandong 266101 (CN); LAO, Chunfeng, Qingdao Shandong 266101 (CN)
(74) Representative: Ziebig, Marlene
(86) International application number: PCT/CN2015/090056
(87) International publication number: WO 2016/045555

(56) References cited:
- EP-A1- 2 886 701
- CN-A- 1 737 242
- CN-A- 1 737 242
- CN-Y- 201 390 906
- JP-A- 2000 084 291
- JP-A- 2000 084 291
- KR-A- 20070 063 996

## Description

### Technical Field

The present invention relates to the field of washing machines, particularly to a clean-water-washing function control method of a washing machine.

### Background of the Invention

On the one hand, with the improvement of people's quality of life, people have more and better choices in their food, clothing, houses and vehicles. Among them, the people's more choices in the "clothing" not only lie in the presence of a variety of styles of choice, but also in the variety of clothing materials. As the molding and color of the clothing are designed to follow a certain standard, the material design in today's fashion design is more and more rich and occupies an increasingly important position. In the clothing world, there are a wide variety of clothing materials, which are changed rapidly. For example, in the production of clothing in formal social occasions, pure cotton, pure wool, pure silk, and pure linen products should be chose. With the clothing materials are more and more rich and more and more expensive, the protection of the clothing is also more and more important. Damage to the clothing often occurs during cleaning of the clothing.

In the prior art, during cleaning of the clothing, the washing program can be selected according to the material of the clothing to reduce the damage to the clothing caused by the physical operation during cleaning of the clothing. However, for the same type of clothing, the degrees of stain may be different, choosing the same washing program will cause the less dirty clothing also to be washed for a long time, affecting the life of the clothing.

On the other hand, the laundry process of the existing conventional washing machines usually comprises water intake, washing - spin-drying - drainage, repeated rinsing - spin-drying - drainage, etc., wherein the washing and each rinsing need to consume a lot of water. The washed or rinsed water is drained to the outside of the washing machine through a drainage pipe. The water consumption of the entire laundry process is relatively large, and the water resource is greatly wasted, especially for the less dirty clothing.

CN 1 737 242 A discloses a water-saving washing machine with water transpiratory function. EP 2 886 701 A1, which falls within the terms of Art. 54(3) EPC, relates to a system comprising a boiler and household equipment consuming hot water. JP 2000 084291 A concerns the problem to save consumption of source water at the time of using a washing machine.

### Summary of the Invention

In view of the presence of at least one defect in the prior art, the inventors of the present application have found that during rinsing of the clothing in a washing machine which uses a recycled water filtration system comprising, for example, a front filter and a filter membrane assembly (such as an ultrafiltration-membrane assembly), the rinsing water in a washing tub may be filtered to recycle the rinsing water.

An object of the present invention is to overcome at least one defect of the prior art washing machine having a rinsing water filtration and recycling function and to provide a clean-water-washing function control method of a washing machine having a recycled water filtration system, which helps guide the user in choosing to wash clothing in a water saving manner, and can wash the clothing effectively and protect the clothing and the recycled water filtration system.

A further object of the present invention is to provide a control method capable of selecting different laundry processes depending on the type of clothing to further protect the clothing and the recycled water filtration system.

In order to achieve at least one of the above objects, the present invention provides a clean-water-washing function control method of a washing machine which includes a recycled water filtration system configured to allow water in the washing tub of the washing machine to flow into the recycled water filtration system during at least one operation stage of the clean-water-washing function of the washing machine and to allow the water to be filtered in the recycled water filtration system and then flow back into the washing tub for reuse, wherein the clean-water-washing function comprises filtering the laundry water discharged from the washing tub of the washing machine and returning the filtered laundry water back to the washing tub for reuse, the method comprising:
step A: receiving a selection instruction of a laundry process, wherein the selection instruction corresponds to information about the type of clothing;
step B: enabling or disabling selection of a clean-water-washing function of the washing machine according to the selection instruction;
step C: determining a laundry sub-program according to whether the clean-water-washing function of the washing machine is selected; and
step D: receiving an execution operating instruction to execute the laundry operation in accordance with the determined laundry sub-process; wherein
the step C comprises:
   judging whether or not the selection of the clean-water-washing function is enabled, and if the selection of the clean-water-washing function is disabled, or if the selection of the clean-water-washing function is enabled and an instruction for selecting the clean-water-washing function is not received, determining that the laundry sub-process is a first laundry sub-process executed by default; and
   if the selection of the clean-water-washing function is enabled and an instruction for selecting the clean-water-washing function is received, determining that the laundry sub-process is a second laundry sub-process having the clean-water-washing function, wherein
   the second laundry sub-process comprises a recycled water rinsing stage for rinsing the clothing in a washing tub of the washing machine with rinsing water, and in the recycled water rinsing step of the recycled water rinsing stage, the rinsing water in the washing tub flows into a recycled water filtration system of the washing machine and flows back into the washing tub after filtration in the recycled water filtration system.

Optionally, the second laundry sub-process further comprises a washing stage executed prior to the recycled water rinsing stage and a dewatering stage executed after the recycled water rinsing stage; wherein
the washing stage comprises:
a washing water injection step of supplying water from a water intake pipe of the washing machine to provide washing water for the washing stage;
a washing step of washing the clothing in the washing tub with a detergent and the washing water; and
a washing dewatering step of dewatering the clothing in the washing tub,
the recycled water rinsing stage comprises:
a rinsing water injection step of supplying water from the water intake pipe to provide rinsing water for the recycled water rinsing stage;
a recycled water rinsing step; and
a rinsing dewatering step of dewatering the clothing in the washing tub, and
the dewatering stage is used to spin-dry the clothing in the washing tub.

Optionally, the first laundry sub-process comprises at least one normal rinsing stage executed consecutively, each of which is used to rinse the clothing in the washing tub of the washing machine with the rinsing water, and in a normal rinsing step of each of the normal rinsing stages, the recycled water filtration system of the washing machine is in a stop state.

Optionally, when the type of the clothing is cotton, a chemical fiber, a compound or undergarment, the selection of the clean-water-washing function is enabled, where it is determined that the type of the clothing is a compound when a plurality of types of clothing are simultaneously placed in the washing tub, or it is determined that the type of the clothing made of multiple materials is a compound.

Optionally, when the type of the clothing is a curtain, the selection of the clean-water-washing function is disabled.

Optionally, the step B further comprises: enabling or disabling selection of a special stain function of the washing machine according to the selection instruction; and
the step C further comprises: determining a laundry sub-process according to whether the special stain function of the washing machine is selected.

Optionally, the clean-water-washing function comprises filtering the laundry water discharged from the washing tub of the washing machine and returning the filtered laundry water back to the washing tub for reuse.

In the control method of the present invention, the user can self-select the laundry process and decide whether to use the clean-water-washing function, so that the control method not only helps guide the user in choosing to wash clothing in a water saving manner, but can also wash the clothing effectively, and protect the clothing and a recycled water filtration system. Moreover, an autonomous and intelligent washing environment is created for the user.

Further, the washing machine can select the corresponding laundry process according to the type of the clothing; and the user can select whether or not to use the clean-water-washing function according to the degrees of stain of the clothing to improve the convenience of the user's operation.

The foregoing and other objects, advantages and features of the present invention will become more apparent to those skilled in the art from the following detailed description of specific embodiments of the invention taken in conjunction with the accompanying drawings.

### Brief Description of the Drawings

Some specific embodiments of the present invention will be described in detail by way of example only rather than by way of limitation with reference to the accompanying drawings. The same reference numerals in the accompanying drawings denote the same or similar components or parts. It should be understood by those skilled in the art that these drawings are not necessarily to scale. In the accompanying drawings:
Fig. 1 is a schematic diagram of a washing machine according to an embodiment of the present invention;
Fig. 2 is a schematic flow chart of a clean-water-washing function control method of a washing machine according to an embodiment of the present invention;
Fig. 3 is a schematic flow chart of the clean-water-washing function control method of a washing machine according to an embodiment of the present invention; and
Fig. 4 is a schematic flow chart of a step C of the clean-water-washing function of the washing machine according to an embodiment of the present invention.

### Detailed Description of the Invention

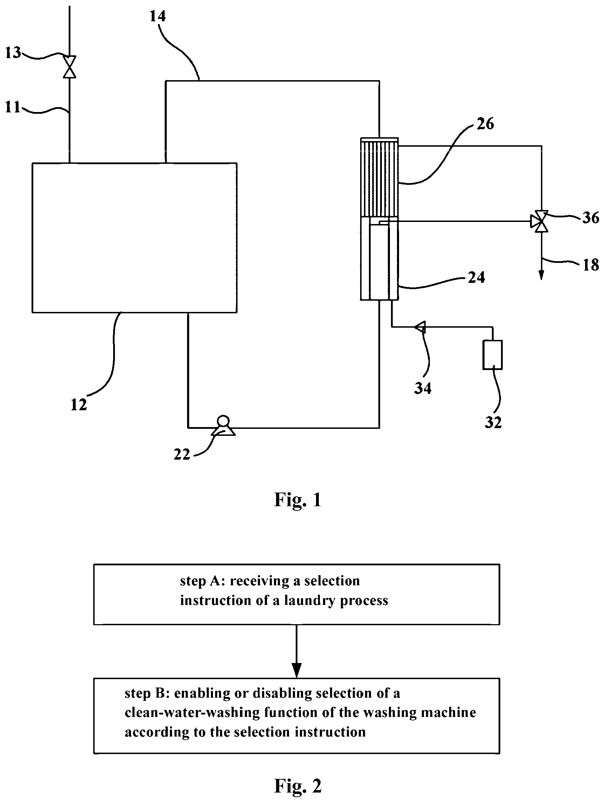

Fig. 1 is a schematic diagram of a washing machine according to an embodiment of the present invention. The washing machine may comprise a washing tub 12, a drainage pump 22, and a filter assembly. The filter assembly comprises a front filter 24 and an ultrafiltration-membrane assembly 26. The washing tub 12 is usually composed of an outer tub and an inner tub which is rotatable within the outer tub. An upper part of the washing tub 12 is provided with a fresh water inlet which is connected to a water supply port through a pipeline 11, and when a valve 13 on the pipeline 11 is opened, fresh washing water or fresh rinsing water may enter the washing tub 12. A lower part of the washing tub 12 is provided with a drainage port, and the drainage port is in communication with the filter assembly via a drainage pump 22 through a pipeline. A water output port of the ultrafiltration-membrane assembly 26 is in communication with the washing tub 12 through a water intake pipeline 14.

The washing machine of the embodiment of the present invention may further comprise an air pump 32, and an air outlet of the air pump 32 is in communication with an air inlet of the filter assembly through an airflow pipeline. A check valve 34 is provided on the airflow pipeline. When air cleaning is required for the filter assembly, the air pump 32 and the check valve 34 are opened, and the air pump 32 provides an airflow to the filter assembly for air cleaning, so as to loose and remove impurities remained or adhered in the filter assembly with the airflow. A dense drainage port of the rough filter 24 and a sewage draining port of the ultrafiltration-membrane assembly 26 may be respectively in communication with two inlets of a three-way valve 36, and an outlet of the three-way valve 36 is in communication with an efflux pipeline 18 of the washing machine, such that the fluid having performed the air cleaning or water washing on the rough filter 24 and/or the ultrafiltration-membrane assembly 26 is directly discharged from the washing machine. The washing water of the washing machine may pass through the drainage pump 22 and the rough filter 24, and the washing water which is not filtered by the rough filter flows out of the washing machine through the outlet of the three-way valve 36 and the efflux pipeline 18 of the washing machine.

The recycled water filtration system of the washing machine of the embodiment of the present invention may comprise a drainage pump 22, a filter assembly and a water intake pipeline 14. The clean-water-washing function may comprise filtering the laundry water discharged from the washing tub 12 of the washing machine and returning the filtered laundry water back to the washing tub 12 for reuse. In the case of using the clean-water-washing function of the washing machine of the embodiment of the present invention, the water in the washing tub 12 is pumped out and conveyed into the filter assembly for filtration, and the filtered water passes through the water output port of the ultrafiltration-membrane assembly 26 and the water intake pipeline 14, and is returned to the washing tub 12 for reuse. That is to say, the recycled water filtration system is configured to allow water in the washing tub of the washing machine to flow into the recycled water filtration system during at least one operation stage of the clean-water-washing function of the washing machine and to allow the water to be filtered in the recycled water filtration system and then flow back into the washing tub for reuse. For example, in the recycled water rinsing stage where the rinsing is carried out in the washing machine, the water in the washing tub may flow into the recycled water filtration system and is filtered therein and then flows back into the washing tub; and in other stages, such as the washing stage or the dewatering stage, the water in the washing tub cannot flow into the recycled water filtration system for filtration, and is discharged directly from the washing machine.

Fig. 2 is a schematic flow chart of the clean-water-washing function control method of a washing machine according to an embodiment of the present invention. The clean-water-washing function control method of a washing machine in the embodiment of the present invention comprises:
step A: receiving a selection instruction of a laundry process. The user can choose the laundry process according to his/her own preference, the degrees of stain of the clothing, etc., and the washing machine can receive the selection instruction of the laundry process, so that the corresponding laundry process can be selected from the system.
step B: enabling or disabling selection of a clean-water-washing function of the washing machine according to the selection instruction. In order to better wash the clothing and protect the clothing and the recycled water filtration system, some of the laundry processes within the system do not have the clean-water-washing function, and therefore the selection of the clean-water-washing function of the washing machine is disabled; and some other laundry processes enable the selection of the clean-water-washing function of the washing machine, so that the washing machine allows or forbids the user to select the clean-water-washing function of the washing machine according to the selection instruction of the selected laundry process.

According to the present invention, the appropriate laundry process can be determined according to the type of the clothing to better protect the clothing and to effectively wash the clothing, while allowing the user to operate the washing machine conveniently. Specifically, the selection instruction corresponds to information about the type of clothing. That is to say, when the selection instruction includes the information about the type of clothing or when the user operates a button of an operation interface of the washing machine, the washing machine may retrieve the corresponding information about the type of clothing which corresponds to the button and stored in advance. For example, when the type of the clothing is cotton, a chemical fiber, a compound or undergarment, the laundry process to be executed is selected to enable the selection of the clean-water-washing function. When the type of the clothing is a curtain, the laundry process to be executed is selected to disable the selection of the clean-water-washing function.

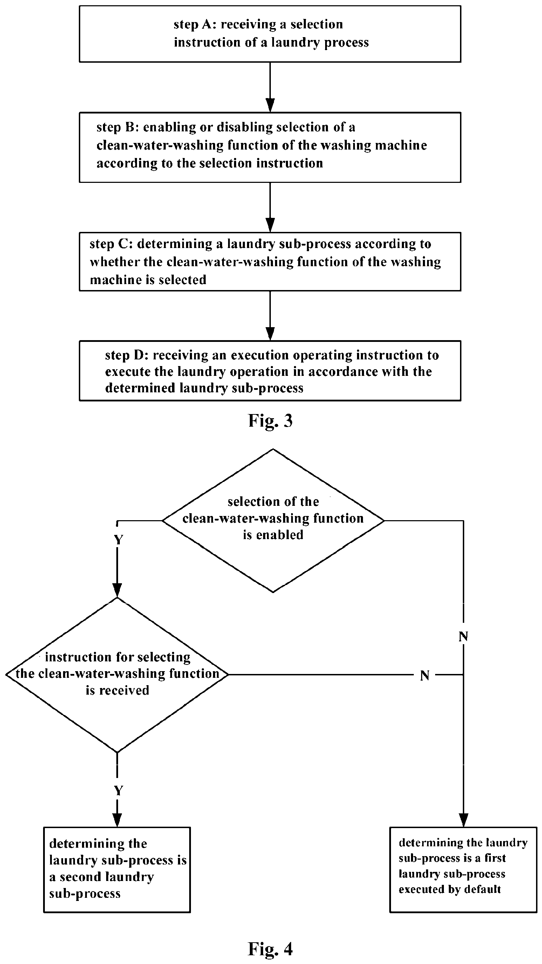

As shown in Fig. 3, the clean-water-washing function control method of a washing machine in the embodiment of the present invention further comprises:
step C: determining a laundry sub-process according to whether the clean-water-washing function of the washing machine is selected.
step D: receiving an execution operating instruction to execute the laundry operation in accordance with the determined laundry sub-process.

Specifically, the step C (determining a laundry sub-process according to whether the clean-water-washing function of the washing machine is selected) comprises:
judging whether or not the selection of the clean-water-washing function is enabled, and if the selection of the clean-water-washing function is disabled, or if the selection of the clean-water-washing function is enabled and an instruction for selecting the clean-water-washing function is not received, determining that the laundry sub-process is a first laundry sub-process executed by default; and
if the selection of the clean-water-washing function is enabled and an instruction for selecting the clean-water-washing function is received, determining that the laundry sub-process is a second laundry sub-process having the clean-water-washing function.

As shown in Fig. 4, the specific working procedure of the step C is judging whether or not the selection of the clean-water-washing function is enabled, and if the selection of the clean-water-washing function is disabled, determining that the laundry sub-process is a first laundry sub-process executed by default. If the selection of the clean-water-washing function is enabled, it is judged whether or not an instruction for selecting the clean-water-washing function is received, and if the instruction for selecting the clean-water-washing function is not received, determining that the laundry sub-process is a first laundry sub-process executed by default, otherwise determining that the laundry sub-process is a second laundry sub-process.

In some embodiments of the present invention, the second laundry sub-process comprises a recycled water rinsing stage in which the rinsing water in the washing tub flows into a recycled water filtration system of the washing machine and flows back into the washing tub after filtration in the recycled water filtration system, so as to make full use of the rinsing water and save water resources.

The second laundry sub-process further comprises a washing stage executed prior to the recycled water rinsing stage and a dewatering stage executed after the recycled water rinsing stage. The washing stage may comprise: a washing water injection step of supplying water from the water intake pipe of the washing machine to provide the washing water for the washing stage; a washing step of washing the clothing in the washing tub with a detergent and the washing water; and a washing dewatering step of dewatering the clothing in the washing tub. The recycled water rinsing stage may comprise: a rinsing water injection step of supplying water from the water intake pipe to provide the rinsing water for the recycled water rinsing stage; a recycled water rinsing step; and a rinsing dewatering step for dewatering the clothing in the washing tub. the dewatering stage is used to spin-dry the clothing in the washing tub. The rotation speed of the washing tub during the dewatering of the clothing in the washing dewatering step and in the rinsing dewatering step is lower than the rotation speed of the washing tub during the dewatering in the dewatering stage, and the time of the dewatering of the clothing in the washing dewatering step and in the rinsing dewatering step is shorter than the time of dewatering in the dewatering stage, because the dewatering of the clothing in the washing dewatering step and in the rinsing dewatering step is only as much as possible to remove the water in the laundry, whereas the dewatering of the clothing in the dewatering stage is to be as much as possible to remove the water in the laundry to facilitate drying. In some alternative embodiments of the present invention, the recycled water rinsing stage has no rinsing dewatering step.

Optionally, the first laundry sub-process comprises at least one normal rinsing stage executed consecutively, each of which is used to rinse the clothing in the washing tub of the washing machine with the rinsing water, and in a normal rinsing step of each of the normal rinsing stages, the recycled water filtration system of the washing machine is in a stop state, so that the rinsing water in the washing tub is held in the washing tub (the stop state here may refer to a deactivated state or a closed state in which the filter in the recycled water filtration system does not operate).

The first laundry sub-process may further comprise a washing stage executed prior to the at least one normal rinsing stage and a dewatering stage executed after the at least one normal rinsing stage. The washing stage comprises: a washing water injection step of supplying water from the water intake pipe of the washing machine to provide the washing water for the washing stage; a washing step of washing the clothing in the washing tub with a detergent and the washing water; and a washing dewatering step of dewatering the clothing in the washing tub. Each of the normal rinsing stages comprises: a rinsing water injection step of supplying water from the water intake pipe to provide the rinsing water for the recycled water rinsing stage; a normal rinsing step; and a rinsing dewatering step for dewatering the clothing in the washing tub. the dewatering stage is used to spin-dry the clothing in the washing tub. In some alternative embodiments of the present invention, the last normal rinsing stage has no rinsing dewatering step.

When the type of the clothing is cotton, a chemical fiber, a compound or undergarment, the laundry process to be executed is selected to enable the selection of the clean-water-washing function, where it is determined that the type of the clothing is a compound when a plurality of types of clothing are simultaneously placed in the washing tub, or it is determined that the type of the clothing made of multiple materials is a compound. For example, in one embodiment of the present invention, the machine is started, entering a laundry process selection interface where the user clicks on the type of clothing that needs to be washed, i.e., the washing machine receives a selection instruction of the laundry process, which includes the information about the type of clothing, when the user selects the type of clothing to be washed as being cotton/linen, the selection instruction, which is received by the washing machine and comprises the information about the type of clothing, is cotton/linen, and the laundry process to be executed is determined to be cotton/linen laundry process which enables the selection of the clean-water-washing function, entering a function selection interface.

The user can decide whether to select the clean-water-washing function according to the degrees of stain of the clothing; if the clothing is dirty, the user can click the start button, the washing machine receives the execution operating instruction and executes the laundry operation according to the first cotton/linen laundry sub-process. If the clothing is less dirty, the user can select the clean-water-washing function to enter the clean-water-washing function interface, the user can click a start button of the clean-water-washing function interface, and the washing machine receives the execution operating instruction and executes the laundry operation according to the second cotton/linen laundry sub-process to wash the clothing. Washing parameters respectively set in the first cotton/linen laundry sub-process and the second cotton/linen laundry sub-process are also different, for example, the first cotton/linen laundry sub-process comprises three consecutive rinsing stages, and the second cotton/linen laundry sub-process only comprises one recycled water rinsing stage.

When the type of the clothing is a curtain, the laundry process to be executed is selected to disable the selection of the clean-water-washing function. For example, when the type of the clothing selected by the user is a curtain, the selection instruction, which is received by the washing machine and comprises the information about the type of clothing, is a curtain, and the laundry process to be executed is selected to be a curtain laundry process which disables the selection of the clean-water-washing function. As the curtain may be washed once or twice a year, there must be a lot of stains thereon; if the clean-water-washing is selected, the curtain will often not be washed cleanly and a lot of stains may be stains that should not be cleaned, which would affect the recycled water filtration system, and therefore, the selection of the clean-water-washing function is disabled for such clothing. The clean-water-washing function button on the function selection interface of the washing machine is in an unselectable state. The user directly clicks the start button, and the washing machine receives the execution operating instruction, and executes the laundry operation in accordance with the first curtain laundry sub-process executed by default. For the different types of clothing, the washing parameters respectively set in the first cotton/linen laundry process and the first curtain laundry sub-process are also different, for example, the washing of the cotton/linen clothing in the first cotton/linen laundry sub-process lasts for 15 minutes, and the washing of the curtain in the first curtain laundry sub-process lasts for 20 minutes.

In some alternative embodiments of the present invention, the clean-water-washing function control method of a washing machine, between the step C and the step D, further comprises a step E of receiving change information of some or all of the parameters of the determined laundry sub-process. For example, the user may make changes on some or all of the washing parameters of the first laundry sub-process in the function selection interface such that the laundry procedure of the first laundry sub-process satisfies his/her own laundry habits, and such changes may be changes in the washing time and the rinsing time. The number of times the recycled water rinsing stages are carried out in the second laundry sub-process cannot be changed, whereas the number of times the normal rinsing stages are carried out in the first laundry sub-process can be changed.

In some other embodiments of the present invention, the step B further comprises: enabling or disabling selection of a special stain function of the washing machine according to the selection instruction. The step C further comprises: determining a laundry sub-process according to whether the special stain function of the washing machine is selected, so as to effectively wash special stains (blood stains, grease, etc.) on the clothing.

At this point, those skilled in the art will recognize that, while numerous exemplary embodiments of the present invention have been shown and described in detail herein, many other variations or modifications that conform to the principles of the present invention may be determined or derived directly from the disclosure of the present invention without departing from the scope of the present invention. It therefore should be understood and determined that the scope of the present invention covers all such other modifications or modifications.

## Claims

1. A clean-water-washing function control method of a washing machine which includes a recycled water filtration system configured to allow water in the washing tub (12) of the washing machine to flow into the recycled water filtration system during at least one operation stage of the clean-water-washing function of the washing machine and to allow the water to be filtered in the recycled water filtration system and then flow back into the washing tub (12) for reuse, wherein the clean-water-washing function comprises filtering the laundry water discharged from the washing tub (12) of the washing machine and returning the filtered laundry water back to the washing tub (12) for reuse,
**characterized in that**
the method comprises:
step A: receiving a selection instruction of a laundry process, wherein the selection instruction corresponds to information about the type of clothing;
step B: enabling or disabling selection of a clean-water-washing function of the washing machine according to the selection instruction;
step C: determining a laundry sub-process according to whether the clean-water-washing function of the washing machine is selected;
step D: receiving an execution operating instruction to execute the laundry operation in accordance with the determined laundry sub-process;
wherein said step C further comprises:
judging whether or not the selection of the clean-water-washing function is enabled, and if the selection of the clean-water-washing function is disabled, or if the selection of the clean-water-washing function is enabled and an instruction for selecting the clean-water-washing function is not received, determining that the laundry sub-process is a first laundry sub-process executed by default; and
if the selection of the clean-water-washing function is enabled and an instruction for selecting the clean-water-washing function is received, determining that the laundry sub-process is a second laundry sub-process having the clean-water-washing function, wherein
the second laundry sub-process comprises a recycled water rinsing stage for rinsing the clothing in a washing tub (12) of the washing machine with rinsing water, and in the recycled water rinsing step of the recycled water rinsing stage, the rinsing water in the washing tub (12) flows into a recycled water filtration system of the washing machine and flows back into the washing tub (12) after filtration in the recycled water filtration system.

2. The control method according to claim 1, wherein the second laundry sub-process further comprises:
a washing stage executed prior to the recycled water rinsing stage and a dewatering stage executed after the recycled water rinsing stage; wherein
the washing stage comprises:
a washing water injection step of supplying water from a water intake pipe of the washing machine to provide washing water for the washing stage;
a washing step of washing the clothing in the washing tub (12) with a detergent and the washing water; and
a washing dewatering step of dewatering the clothing in the washing tub (12),
the recycled water rinsing stage comprises:
a rinsing water injection step of supplying water from the water intake pipe to provide rinsing water for the recycled water rinsing stage;
a recycled water rinsing step; and
a rinsing dewatering step of dewatering the clothing in the washing tub (12), and
the dewatering stage is used to spin-dry the clothing in the washing tub (12).

3. The control method according to claim 1 or 2, wherein
the first laundry sub-process comprises at least one normal rinsing stage executed consecutively, each of which is used to rinse the clothing in the washing tub (12) of the washing machine with the rinsing water, and in a normal rinsing step of each of the normal rinsing stages, the recycled water filtration system of the washing machine is in a stop state.

4. The control method according to any one of the preceding claims, wherein
when the type of the clothing is cotton, a chemical fiber, a compound or undergarment, the selection of the clean-water-washing function is enabled, where it is determined that the type of the clothing is a compound when a plurality of types of clothing are simultaneously placed in the washing tub (12), or it is determined that the type of the clothing made of multiple materials is a compound.

5. The control method according to any one of the preceding claims, wherein
when the type of the clothing is a curtain, the selection of the clean-water-washing function is disabled.

6. The control method according to any one of the preceding claims, wherein
said step B further comprises: enabling or disabling selection of a special stain function of the washing machine according to the selection instruction; and
said step C further comprises: determining a laundry sub-process according to whether the special stain function of the washing machine is selected.

## Patentansprüche

1. Verfahren zur Steuerung einer Klarwasserwaschfunktion einer Waschmaschine, die ein Recyclingwasserfiltrationssystem umfasst, das dazu ausgestaltet ist, während mindestens einer Betriebsphase der Klarwasserwaschfunktion der Waschmaschine Wasser in dem Waschbehälter (12) der Waschmaschine in das Recyclingwasserfiltrationssystem fließen zu lassen und das Wasser in dem Recyclingwasserfiltrationssystem filtern und dann zur Wiederverwendung in den Waschbehälter (12) zurückfließen zu lassen, wobei die Klarwasserwaschfunktion ein Filtern des aus dem Waschbehälter (12) der Waschmaschine abgeführten Waschwassers und Rückführen des gefilterten Waschwassers in den Waschbehälter (12) zur Wiederverwendung umfasst,
**dadurch gekennzeichnet, dass**
das Verfahren Folgendes umfasst:
Schritt A: Empfangen einer Auswahlanweisung bezüglich eines Waschvorgangs, wobei die Auswahlanweisung Informationen über die Art von Kleidung entspricht;
Schritt B: Aktivieren oder Deaktivieren einer Auswahl einer Klarwasserwaschfunktion der Waschmaschine gemäß der Auswahlanweisung;
Schritt C: Bestimmen eines untergeordneten Waschvorgangs, je nachdem, ob die Klarwasserwaschfunktion der Waschmaschine ausgewählt wird;
Schritt D: Empfangen einer Ausführungsbetriebsanweisung, den Waschbetrieb entsprechend dem bestimmten untergeordneten Waschvorgang auszuführen;
wobei der Schritt C weiterhin Folgendes umfasst:
Beurteilen, ob die Auswahl der Klarwasserwaschfunktion aktiviert ist oder nicht, und, wenn die Auswahl der Klarwasserwaschfunktion deaktiviert ist oder wenn die Auswahl der Klarwasserwaschfunktion aktiviert ist und keine Anweisung zum Auswählen der Klarwasserwaschfunktion empfangen wird, Bestimmen, dass der untergeordnete Waschvorgang ein erster untergeordneter Waschvorgang ist, der standardmäßig ausgeführt wird; und
wenn die Auswahl der Klarwasserwaschfunktion aktiviert ist und eine Anweisung zum Auswählen der Klarwasserwaschfunktion empfangen wird, Bestimmen, dass der untergeordnete Waschvorgang ein zweiter untergeordneter Waschvorgang mit der Klarwasserwaschfunktion ist, wobei
der zweite untergeordnete Waschvorgang eine Recyclingwasserspülphase zum Spülen der Kleidung in einem Waschbehälter (12) der Waschmaschine mit Spülwasser umfasst und in dem Recyclingwasserspülschritt der Recyclingwasserspülphase das Spülwasser in dem Waschbehälter (12) in ein Recyclingwasserfiltrationssystem der Waschmaschine fließt und nach der Filtration in dem Recyclingwasserfiltrationssystem in den Waschbehälter (12) zurückfließt.

2. Steuerverfahren nach Anspruch 1, wobei der zweite untergeordnete Waschvorgang weiterhin Folgendes umfasst:
eine Waschphase, die vor der Recyclingwasserspülphase ausgeführt wird, und eine Entwässerungsphase, die nach der Recyclingwasserspülphase ausgeführt wird; wobei
die Waschphase Folgendes umfasst:
einen Waschwassereinspritzschritt zum Zuführen von Wasser aus einer Wasserzulaufleitung der Waschmaschine, um Waschwasser für die Waschphase bereitzustellen;
einen Waschschritt zum Waschen der Kleidung in dem Waschbehälter (12) mit einem Waschmittel und dem Waschwasser; und
einen Wasch-Entwässerungsschritt zum Entwässern der Kleidung in dem Waschbehälter (12),
die Recyclingwasserspülphase Folgendes umfasst:
einen Spülwassereinspritzschritt zum Zuführen von Wasser aus der Wasserzulaufleitung, um Spülwasser für die Recyclingwasserspülphase bereitzustellen;
einen Recyclingwasserspülschritt; und
einen Spül-Entwässerungsschritt zum Entwässern der Kleidung in dem Waschbehälter (12), und
die Entwässerungsphase genutzt wird, um die Kleidung in dem Waschbehälter (12) zu schleudern.

3. Steuerverfahren nach Anspruch 1 oder 2, wobei
der erste untergeordnete Waschvorgang mindestens eine normale Spülphase umfasst, die nacheinander ausgeführt wird, die jeweils dazu genutzt wird, die Kleidung in dem Waschbehälter (12) der Waschmaschine mit dem Spülwasser zu spülen, und in einem normalen Spülschritt jeder der normalen Spülphasen das Recyclingwasserfiltrationssystem der Waschmaschine in einem Stoppzustand ist.

4. Steuerverfahren nach einem der vorangehenden Ansprüche, wobei
wenn die Art der Kleidung Baumwolle, eine Chemiefaser, ein Gemisch oder Unterbekleidung ist, die Auswahl der Klarwasserwaschfunktion aktiviert wird, wobei bestimmt wird, dass die Art der Kleidung ein Gemisch ist, wenn eine Mehrzahl von Arten von Kleidung gleichzeitig in den Waschbehälter (12) eingelegt wird, oder bestimmt wird, dass die Art der Kleidung, die aus mehreren Materialien hergestellt ist, ein Gemisch ist.

5. Steuerverfahren nach einem der vorangehenden Ansprüche, wobei
wenn die Art der Kleidung ein Vorhang ist, die Auswahl der Klarwasserwaschfunktion deaktiviert wird.

6. Steuerverfahren nach einem der vorangehenden Ansprüche, wobei
der Schritt B weiterhin umfasst: Aktivieren oder Deaktivieren einer Auswahl einer speziellen Fleckenfunktion der Waschmaschine gemäß der Auswahlanweisung; und
der Schritt C weiterhin umfasst: Bestimmen eines untergeordneten Waschvorgangs, je nachdem, ob die spezielle Fleckenfunktion der Waschmaschine ausgewählt wird.

## Revendications

1. Procédé de commande de fonction de lavage à l'eau propre d'un lave-linge, lequel comprend un système de filtration d'eau recyclée, conçu pour permettre à l'eau dans la cuve de lavage (12) du lave-linge de s'écouler dans le système de filtration d'eau recyclée pendant au moins une étape fonctionnelle de la fonction de lavage à l'eau propre du lave-linge et pour permettre à l'eau d'être filtrée dans le système de filtration d'eau recyclée et ensuite d'être refluée dans la cuve de lavage (12) pour la réutilisation, la fonction de lavage à l'eau propre comprenant le filtrage d'eau de linge évacuée de la cuve de lavage (12) du lave-linge et le renvoi d'eau de linge filtrée dans la cuve de lavage (12) pour la réutilisation,
**caractérisé en ce que**
ledit procédé comprend les étapes suivantes :
étape A : à recevoir une instruction de sélection d'un processus de traitement de linge, ladite instruction de sélection correspondant à des informations sur le type de vêtement ;
étape B : à activer ou à désactiver la sélection d'une fonction de lavage à l'eau propre du lave-linge en fonction de l'instruction de sélection ;
étape C : à déterminer un sous-processus de traitement de linge en fonction de la fonction de lavage à l'eau propre du lave-linge sélectionnée ;
étape D : à recevoir une instruction de fonctionnement d'exécution pour exécuter l'opération de traitement de linge en fonction du sous-processus de traitement de linge déterminé ;
ladite étape C comprenant en outre :
à déterminer si la sélection de la fonction de lavage à l'eau propre est activée ou non et à déterminer, lorsque la sélection de la fonction de lavage à l'eau propre est désactivée ou lorsque la sélection de la fonction de lavage à l'eau propre est activée et une instruction de sélection de la fonction de lavage à l'eau propre n'est pas reçue, que le sous-processus de traitement de linge est un premier sous-processus de traitement de linge exécuté par défaut ; et
à déterminer, lorsque la sélection de la fonction de lavage à l'eau propre est activée et lorsqu'une instruction de sélection de la fonction de lavage à l'eau propre est reçue, que le sous-processus de traitement de linge est un deuxième sous-processus de traitement de linge à fonction de lavage à l'eau propre,
le deuxième sous-processus de traitement de linge comprenant une étape de rinçage à l'eau recyclée, pour rincer les vêtements dans la cuve de lavage (12) du lave-linge avec de l'eau de rinçage et dans l'étape de rinçage à l'eau recyclée de l'étape de rinçage à l'eau recyclée, l'eau de rinçage dans la cuve de lavage (12) s'écoulant dans un système de filtration d'eau recyclée du lave-linge et ladite eau de rinçage refluant dans la cuve de lavage (12) après la filtration dans le système de filtration d'eau recyclée.

2. Procédé de commande selon la revendication 1, le deuxième sous-processus de traitement de linge comprenant en outre :
un stade de lavage, exécuté avant le stade de rinçage à l'eau recyclée et un stade d'essorage, exécuté après le stade de rinçage à l'eau recyclée ;
le stade de lavage comprenant les étapes suivantes :
une étape d'injection d'eau de rinçage, consistant à fournir de l'eau, à partir d'un tuyau d'arrivée d'eau du lave-linge, pour fournir de l'eau de rinçage pour l'étape de lavage ;
une étape de lavage, consistant à laver les vêtements dans la cuve de lavage (12) avec un détergent et l'eau de rinçage ; et
une étape d'essorage, consistant à essorer les vêtements dans la cuve de lavage (12),
le stade de rinçage à l'eau recyclée comprenant les étapes suivantes :
une étape d'injection d'eau de rinçage, consistant à fournir de l'eau, à partir du tuyau d'arrivée d'eau, pour fournir de l'eau de rinçage pour le stade de rinçage à l'eau recyclée ;
une étape de rinçage à l'eau recyclée; et
une étape d'essorage, consistant à essorer les vêtements dans la cuve de lavage (12), et
le stade d'essorage étant utilisé pour sécher les vêtements dans la cuve de lavage (12).

3. Procédé de commande selon la revendication 1 ou 2, le premier sous-processus de traitement de linge comprenant au moins un stade de rinçage normal exécuté consécutivement, ledit stade de rinçage normal respectif étant utilisé pour rincer les vêtements dans la cuve de lavage (12) du lave-linge avec de l'eau de rinçage et dans une étape de rinçage normale dudit stade de rinçage normale respectif, le système de filtration d'eau recyclée du lave-linge est dans l'état d'arrêt.

4. Procédé de commande selon l'une quelconque des revendications précédentes, lorsque le type de vêtement est le coton, une fibre chimique, un composé ou un sous-vêtement, la sélection de la fonction de lavage à l'eau propre étant activé,
le type de vêtement étant déterminé en tant qu'un composé lorsqu'une pluralité de types de vêtements est placée simultanément dans la cuve de lavage (12) ou le type de vêtement étant déterminé en tant qu'un composé lorsque le vêtement est constitué de plusieurs matériaux.

5. Procédé de commande selon l'une quelconque des revendications précédentes, lorsque le type de vêtement est un rideau, la sélection de la fonction de lavage à l'eau propre étant désactivée.

6. Procédé de commande selon l'une quelconque des revendications précédentes,
ladite étape B comprenant en outre : l'activation ou la désactivation de la sélection d'une fonction de colorant spéciale du lave-linge en fonction de l'instruction de sélection ; et
ladite étape C comprenant en outre : la détermination d'un sous-processus de traitement de linge lorsque la fonction de colorant spéciale du lave-linge est sélectionnée.
